(19) Europäisches Patentamt
European Patent Office
Office européen des brevets

(11) **EP 3 779 632 A1**

(12) **EUROPEAN PATENT APPLICATION**
published in accordance with Art. 153(4) EPC

(43) Date of publication:
**17.02.2021 Bulletin 2021/07**

(51) Int Cl.:
***G05D 1/02*** $^{(2020.01)}$

(21) Application number: **19776104.2**

(22) Date of filing: **25.03.2019**

(86) International application number:
**PCT/JP2019/012300**

(87) International publication number:
**WO 2019/188866 (03.10.2019 Gazette 2019/40)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **28.03.2018 JP 2018061776**

(71) Applicant: **Equos Research Co., Ltd.
Tokyo 101-0021 (JP)**

(72) Inventor: **KUNO, Kazuhiro
Tokyo 101-0021 (JP)**

(74) Representative: **TBK
Bavariaring 4-6
80336 München (DE)**

(54) **MOVING BODY**

(57)    [Problem]
To provide a moving body that can be prevented from moving in a large turn when a target turns.

[Solution]
According to a moving body (1), the position (Pu) and orientation (Du) of a user (H) are calculated based on distance measurement data (MP) which is the measured distance to the user (H), and based on this, a moving target (T1) and a control target (T2) for the moving body (1) with respect to the user (H) are calculated. In addition, the position (Pr) and the orientation (Dr) of the moving body (1) in a user coordinate system are calculated based on the position (Pu) and direction (Du) of the user (H), and a shift control target (T2') which is set by shifting the control target (T2) toward the user (H) side is calculated based on an angular deviation $\Delta\theta$, which is the angle formed by the orientation (Dr) of the moving body (1). A drive unit (18) is operated such that the moving body (1) moves toward the shift control target (T2'), so the moving body (1) can be prevented from moving in a large turn when the user (H) turns or rotates.

Fig. 3 ( a )

Fig. 3 ( b )

**Description**

[Technical Field]

The present invention relates to a moving body, in particular, to a moving body that can be prevented from moving in a large turn when a target turns.

[Background]

In Patent Literature 1, a moving robot 1 is disclosed that conduct following action while maintaining a predetermined diagonally forward and relative position to a moving target 2. The moving robot 1 detects an orientation of the target 2 by a camera and the like and determines a target position of the moving robot 1 corresponding to the detected orientation of the target 2. The moving robot 1 calculates a travel route to the determined target position and moves.

[Citation List]

[Patent Literature]

[Patent Literature 1] Japanese Laid-Open Patent Publication No. 2008-234404

[Summary of the Invention]

[Problems to be Solved by the Invention]

However, when the moving robot 1 follows the target 2 in the front thereof, if the target 2 turns, the moving robot 1 follows in a large turn in comparison with the action of the target 2. Especially, when the moving robot 1 follows the target 2 at the position shifted toward the left or right front of the target 2 rather than at the direct front of the target 2, the moving body moves in a larger turn. For example, as shown in Patent Literature 1, when the moving robot 1 follows the target 2 in the right front thereof, if the target 2 turns left, the moving robot 1 moves in a very large left turn. As the distance between the target position of the moving robot 1 and the target 2 increases, this problem becomes noticeable.
The present invention has been made to solve the above-described problem, and an object of the present invention is to provide a moving body that can be prevented from moving in a large turn when a target turns.

[Means for Solving the Problems]

In order to achieve this object, a moving body according to the present invention is provided with a movement unit with which the moving body moves following a target. The moving body includes a distance measurement unit for measuring the target, a position orientation calculation unit for calculating position and orientation of the target based on a plurality of distance measurement data measured by the distance measurement unit, a moving target calculation unit for calculating a moving target for the moving body with respect to the target based on a calculation result obtained by the position orientation calculation unit, a moving target shift unit for shifting the moving target to a target side based on an angular deviation formed by an orientation of the moving body and the orientation of the target calculated by the position orientation calculation unit, and a movement control unit for controlling the movement unit so that the moving body moves to the moving target shifted by the moving target shift unit.
It should be noted that, a midpoint on a target path used for calculation of the steering angle by steering angle calculation unit is not necessarily a midpoint of the position of the moving body and the moving target but may be a point near the midpoint on the target path or a point approximated on the target path near the midpoint.

[Effects of the Invention]

According to the moving body of the present invention, the position and orientation of the target are calculated based on a plurality of distance measurement data obtained by measuring the target, and based on this calculation result the moving target with respect to the target is calculated. Further, based on the angular deviation formed by the orientation of the moving body and the orientation of the target, the moving target is shifted toward the target side. The movement unit is controlled so that the moving body moves to the moving target shifted toward the target side. Thus, the moving body can be prevented from moving in a large turn when the target turns.

[Brief Description of the Drawings]

Figs. 1 are external views of a moving body.
Fig. 2 is a view indicating a moving target for the moving body.
Fig. 3(a) is a view indicating a control target for the moving body.
Fig. 3(b) is a view indicating the control target position and a shift control target position when a user turns left on the spot.
Fig. 4 is a block diagram indicating an electrical configuration of the moving body.
Fig. 5 is a flowchart of the moving body.
Fig. 6(a) is a view indicating the control target of the moving body.
Fig. 6(b) is a graph indicating a position in a xu-axis direction of the shift control target corresponding to an angular deviation.
Fig. 7(a) is a view for an explain of the calculation of a steering command value of the moving body.
Fig. 7(b) is a graph indicating correction amount of the steering command value corresponding to a lateral deviation.
Fig. 8 is a view indicating movement trajectories on the basis of the control target and shift control target when the user turns left on the spot.

[Description of the Preferred Embodiments]

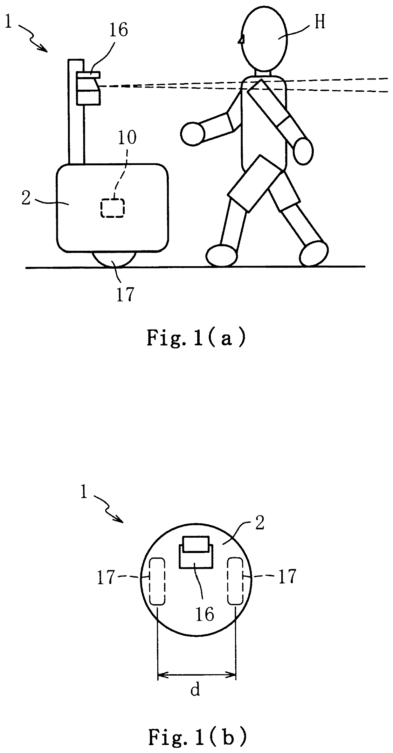

Hereinafter, preferred embodiments of the present invention will be described with reference to the accompanying drawings. First, with reference to Figs. 1, a configuration of a moving body 1 according to the present embodiment will be described. Figs. 1 are external views of the moving body 1. The moving body 1 moves to an appropriate position with respect to a user H in right front of the user H (target), thereby functioning as a device which can follow the user H.

As shown in Figs. 1, the moving body 1 mainly includes a substantially cylindrical outer case 2, a control unit 10 provided in the outer case 2 and controlling each part of the moving body 1, a distance measurement sensor 16, and wheels 17. The distance measurement sensor 16 is a device arranged on an upper part of the outer case 2 and detecting a distance (distance measurement) between the distance measurement sensor 16 and an object by irradiating laser light in all directions (360°). The distance measurement sensor 16 transmits a distance to the object detected every 0.25 degree to the control unit 10 in association with the angle to the control unit 10. Further, the distance measurement sensor 16 is configured to be movable in vertical direction and the position of the distance measurement sensor 16 in the vertical direction is appropriately set so that the laser light from the distance measurement sensor 16 is irradiated in advance to the periphery of the shoulder of the user H. Hereinafter, the distance and the angle detected by the distance measurement sensor 16 are referred to as "distance measurement data".

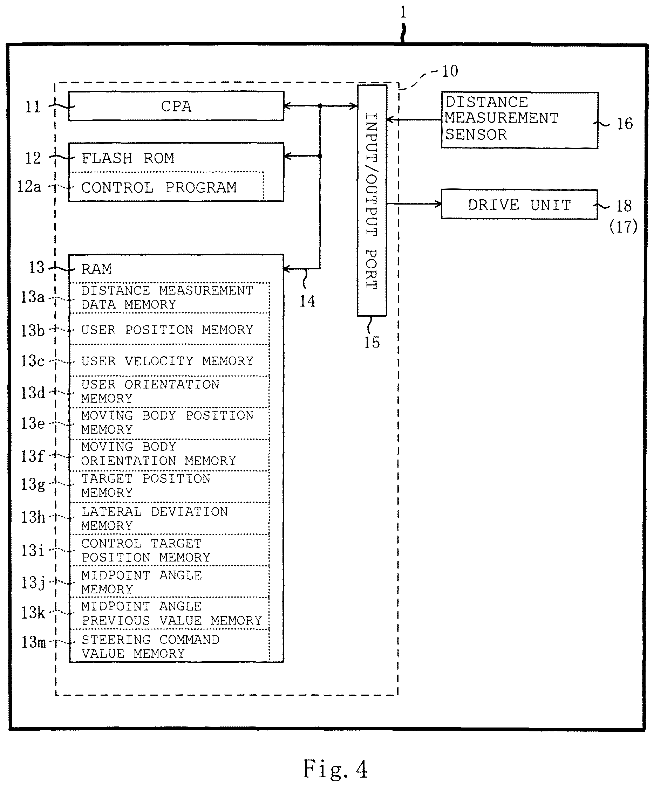

A pair of left and right wheels 17 are provided facing each other at a bottom part of the outer case 2. As shown in Fig. 1(b), a width between the left and right wheels 17 is defined as d. A motor (not shown) is connected to each of the left and right wheels 17, and the moving body 1 is moved by driving the motors based on a control signal from a drive unit 18 (see Fig.4) described later.

Forward movement and backward movement of the moving body 1 are conducted by normally and reversely rotating the left and right motors with the same output and change of movement direction of the moving body 1 is conducted by differentially rotating the motors. When the moving body 1 moves in the left and right direction, it is necessary to change the moving direction of the moving body 1 since the moving body 1 cannot directly move in left and right directions along which the wheels 17 are provided. That is, the moving body 1 moves through the wheels 17 and the drive unit 18 (moving part) having non-holonomic restraint condition.

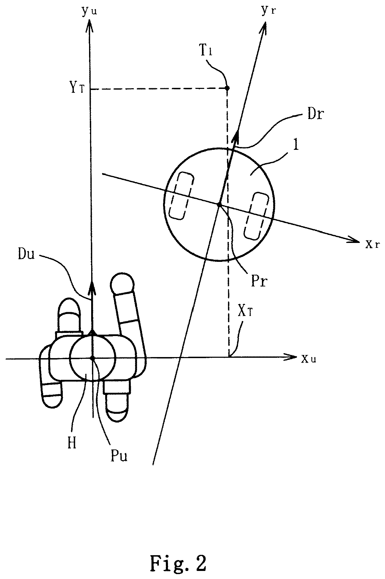

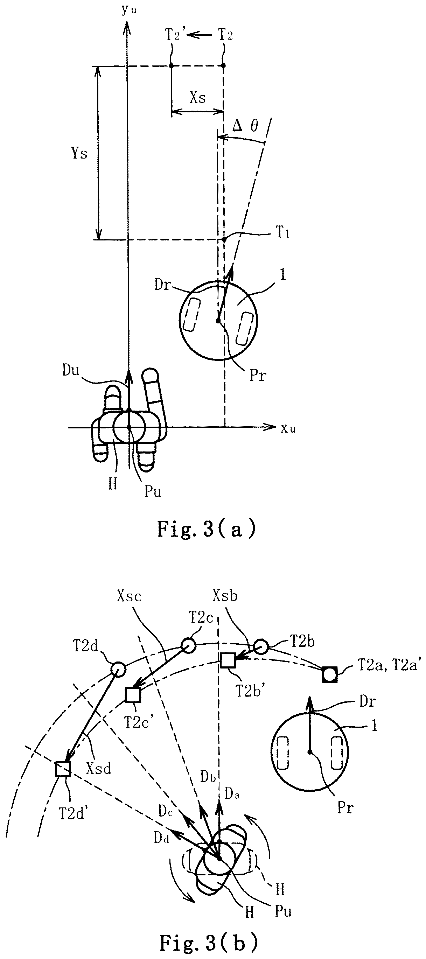

Next, with reference to Figs. 2 to 3, a moving target T1 and a control target T2 of the moving body 1 will be described. Fig. 2 is a view indicating the moving target T1, Fig. 3(a) is a view indicating the control target T2 of the moving body 1, Fig. 3(b) is a view indicating the position of the control target T2 and the position of a shift control target T2' when the user H turns left on the spot.

As shown in Fig. 2, the moving body 1 moves following the moving target T1 set in the right front of the user H. In the present embodiment, the moving target T1 of the moving body 1 is set at a position "0.6 m" of the front side and "0.3 m" of the right side of the user H. Further, movement control of the moving body 1 is conducted by processing the distance measurement data MP obtained from the distance measurement sensor 16 based on a "moving body coordinate system" and a "user coordinate system". In the moving body coordinate system, a position Pr of the moving body 1 is defined as an origin (0,0), an orientation Dr of the moving body 1 is defined as 90°, a horizontal direction for the moving body 1 is defined as an xr-axis, and a vertical direction orthogonal to the xr-axis is defined as a yr-axis, and in the user coordinate system, a position Pu of the user H is defined as an origin (0, 0), an orientation Du of the user H is defined as 90°, a horizontal direction for the user H is defined as an xu-axis, and a vertical direction orthogonal to the xu-axis is defined as a yu-axis.

When the user H turns, it is necessary for the moving body 1 to turn along with the user H. Since a distance between the moving body 1 and the moving target T1 is relatively small, a turning radius of the moving body 1 is also small. Since the moving body 1 turns by differentially driving the left and right wheels 17, the moving body 1 cannot turn enough when trying to make a sharp turn with a small turning radius. Thus, there may be a delay in the following the user H.

Therefore, as shown in Fig. 3(a), the control target T2 obtained by moving (shifting) the moving target T1 in the yu-axis direction by a Ys is set, and the moving body 1 is controlled to move to the control target T2 as a target. In the present embodiment, a shift amount Ys of the moving target T1 is calculated based on the velocity Vu of the user H. Specifically, the shift amount Ys is calculated based on Formula 1.

$$Ys = Vu \times \Delta T \quad \cdot \quad \cdot \quad \cdot \text{ Formula 1}$$

In Formula 1, $\Delta T$ is a predetermined time interval and "one second is exemplified. That is, the control target T2 is a position that is obtained by adding a distance that the user H advances for one second to the moving target T1. By virtue of the moving body 1 moving with the control target T2 as the moving target, a distance of the moving body 1 and the moving target can be secured. Thus, in comparison with a case where the moving body 1 moves with the moving target T1 as the moving target, the turning radius of the moving body 1 can be enlarged. As a result, even if the user H turns sharply, the moving body 1 can turn gently along a large turning radius, thereby preventing a delay in the following the user H.

A movement action of the moving body 1 when the user H turns or rotates will be hereinafter described. First, when the user H turns right or rotates right, since the user H turns or rotates in a direction to where the moving body 1 is located, a change of the control target T2 according to this rotation or turn is small. Therefore, the trajectory of the moving body 1 that moves following the control target T2 (hereinafter, abbreviated as "movement trajectory") is small as a whole.

On the other hand, when the user H turns left or rotates left, the user H turns or rotates in a reverse direction with respect to the moving body 1 that is located in the right front of the user H. That is, since the user H turns or rotates in a direction distant from the moving body 1, a change of the control target T2 according to this rotation or turn is larger in comparison with the case where the user H turns right or rotates right. As a result, the movement trajectory is large as a whole.

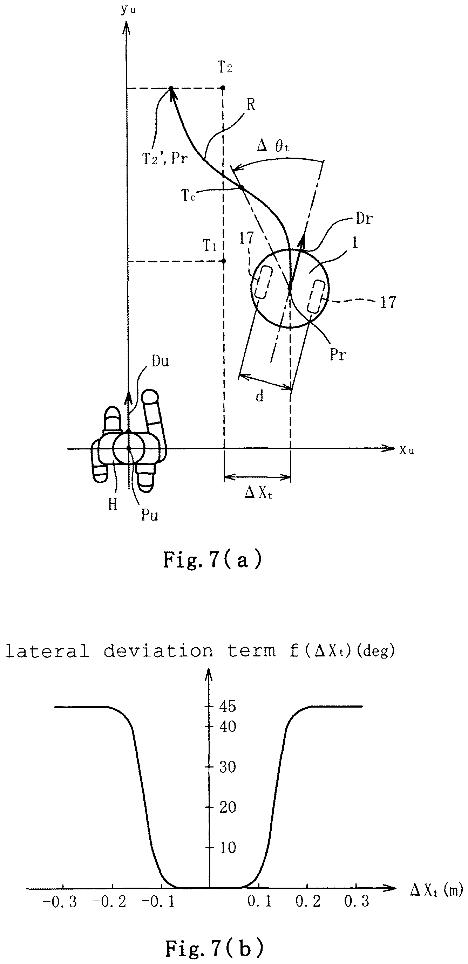

Further, since the moving body 1 follows the user H in the right front thereof, according to the moving body 1 that is located in the right front of the user H, when the user H turns left or right by the same angle, an angular deviation of the orientation Du of the user H after turning and the orientation Dr of the moving body 1 is smaller when the user H turns left. Although the details will be described with reference to Figs. 7, a steering command value ω for steering the moving body 1 is a value corresponding to the angular deviation by the orientation Dr of the moving body 1 and the position on the basis of the control target T2, and as described above, the control target T2 is calculated based on the moving target T1 and moving target T1 is further calculated based on the orientation Du of the user H, thus the smaller the angular deviation by the orientation Dr of the moving body 1 and the orientation Du of the user H becomes, the smaller the steering command value ω becomes. As a result, since the steering command value ω becomes smaller when the user H turns left than when the user H turns right, the moving body 1 moves in a large turn by that.

In the present embodiment, the shift control target T2' is calculated by moving (shifting) the control target T2 to the user H side in the Xu-axis direction by the Xs based on an angle $\Delta\theta$ by the orientation Dr of the moving body 1 and the moving body 1 is controlled to move targeting the shift control target T2'. Referring to Fig. 3(b), the positions of the control target T2 and the shift control target T2' are compared when the user H turns left on the spot.

Fig. 3(b) is a view indicating the positions of the control target T2 and the shift control target T2' when the user H turns left on the spot. In Fig. 3(b), the user H turns left on the spot from the orientation Da to the orientations Db, Dc, Dd and keeps turning left after turns to the orientation Dd. In Fig. 3(b), the case where the shift amount Ys is set to a constant value, not zero, even when the user H turns left on the spot is shown for good explanation.

According to this rotation of the user H, a control target T2a corresponding to the orientation Da of the user H is calculated. In Fig. 3(b), since the orientation Da of the user H coincides with the orientation Dr of the moving body 1, the control target T2a and the shift control target T2a' are determined to be at the same position.

Sequentially, the control target T2b is calculated from the orientation Db of the user H, the shift amount $X_sb$ is calculated based on the orientation Db of the user H and the orientation Dr of the moving body 1, the shift control target T2b' is calculated from the control target T2b and the shift amount $X_sb$. In the same manner, the control target T2c, the shift amount $X_sc$, and the shift control target T2c' are calculated from the orientation Dc of the user H and the orientation Dr of the moving body 1, and the shift control T2d, the shift amount $X_sd$, and the shift control target T2d' are calculated from the orientation Dd of the user H and the orientation Dr of the moving body 1.

Since the shift control targets T2b' to T2d' are shifted in the xu-axis direction than the control targets T2b to T2d, that is , shifted in the front side of the user H, a distance between the position Pu of the user H and the shift control targets T2b' to T2d' becomes smaller than a distance between the position Pu and the control targets T2b to T2d. Therefore, the distribution of the shift control targets T2b' to T2d' becomes closer to the user H side than the distribution of the control targets T2b to T2d. As a result, since the movement trajectory based on the shift control targets T2b' to T2d' can have a smaller radius than the movement trajectory based on the control targets T2b to T2d, even when the user H turns left, the moving body 1 can be prevented from moving in a large turn.

With reference to Fig. 4, an electrical configuration of the moving body 1 will be described. Fig. 4 is a block diagram indicating an electric configuration of the moving body 1. The moving body 1 includes the control unit 10 having a CPU 11, a flash ROM 12, and a RAM 13, which are respectively connected to an input/output port 15 through a bus line 14. The distance measurement sensor 16 and the drive unit 18 are further connected to the input/output port 15.

The CPU 11 is an arithmetic device for controlling the respective sections mutually connected with the bus line 14. A control program 12a is stored in the flash ROM 12 as a non-volatile rewritable memory device for storing the program executed by the CPU 11 and data of fixed values. Upon execution of the control program 12a by the CPU 11, a main processing shown in Figs. 3 is executed.

The RAM 13 is a memory to rewritably store various work data and flags and the like when the CPU 11 executes the control program 12a. In the RAM 13, it is respectively provided a distance measurement data memory 13a in which the distance measurement data MP measured from the distance measurement sensor 16 are stored, a user position memory 13b in which a position Pu of the user H is stored, a user velocity memory 13c in which a velocity Vu of the user H is stored, a user orientation memory 13d in which an orientation Du of the user H is stored, a moving body position memory 13e in which a position Pr of the moving body 1 is stored, a moving body orientation memory 13f in which an orientation Dr of the moving body 1 is stored, a target position memory 13g in which the moving target T1 of the moving body 1 is stored, a lateral deviation memory 13h in which a lateral deviation $\Delta Xt$ (see Fig. 7 (a)) which is a deviation in the xu-axis direction of the position Pr of the moving body 1 and the moving target T1 is stored, a control target position memory 13i in which the shift control target T2' is stored, a midpoint angle memory 13j, a midpoint angle previous value memory 13k, and a steering command value memory 13m in which the steering command value $\omega$ to steer the moving body 1 is stored.

The midpoint angle memory 13j is a memory in which an angle $\Delta\theta_t$ is stored. The angle $\Delta\theta_t$ is formed by the position Pr of the moving body 1 and a midpoint Tc which is on a target path R of the moving body 1 being connected the position Pr of the moving body 1 and the shift control target T2' (see Fig. 7(a)). The midpoint angle previous value memory 13k is a memory in which a previous value $\Delta\theta_{t0}$ of the angle $\Delta\theta t$.

In the present embodiment, the user position memory 13b and the user orientation memory 13d have values therein based on the moving body coordinate system mentioned in the above, and the moving body position memory 13e, the moving body orientation memory 13f, the target position memory 13g, the control target position memory 13i, the midpoint angle memory 13j, and the midpoint angle previous value memory 13k have values therein based on the user coordinate system.

The drive unit 18 is a device to move and operate the moving body 1, and is constituted from the wheels 17 (see Figs. 1), the motor (not shown) serving as a drive source of the wheels 17, and the like. When a control signal is input from the control unit 10 to the drive unit 18, the motor rotates based on the input control signal, and the wheels 17 are driven by the rotation of the motor to operate the moving body 1.

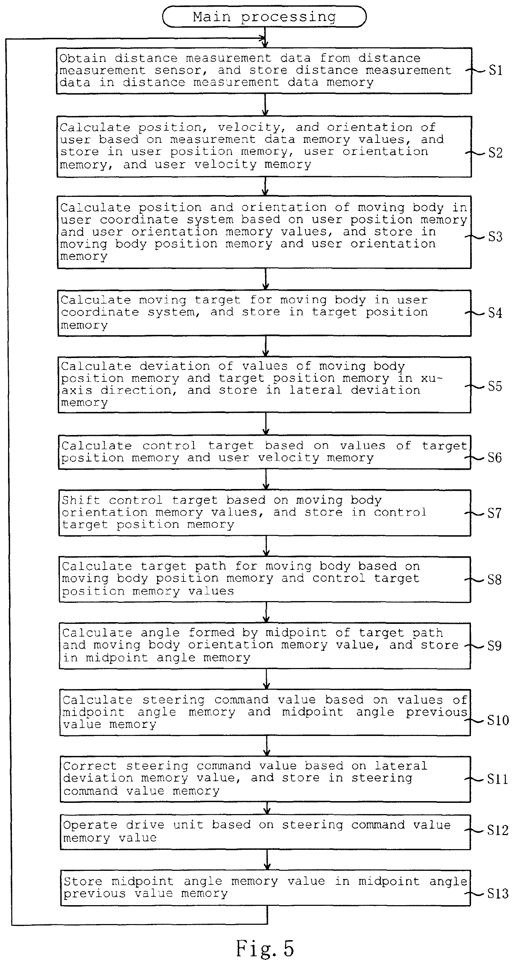

Next, with reference to Figs. 5 to 7, the main processing executed by the CPU 11 of the moving body 1 will be described. Fig. 5 is a flowchart of the main processing of the moving body 1. The main processing is executed immediately after the moving body 1 is powered on. In the main processing, first, the distance measurement data MP obtained from the distance measurement sensor 16 are stored in the distance measurement data memory 13a (S1).

Subsequent to the processing of S1, based on the distance measurement data MP of the distance measurement data memory 13a, the position Pu of the user H, the velocity Vu of the user H, and the orientation Du of the user H are calculated based on the moving body coordinate system and respectively stored in the user position memory 13b, the user velocity memory 13c, and the user orientation memory 13d (S2). Since the distance measurement data MP are values based on the moving body 1, the position Pu of the user H, the velocity Vu of the user H, and the orientation Du of the user H are calculated based on the moving body coordinate system.

Subsequent to the processing of S2, a coordinate transformation is performed with the position Pu of and the orientation Du of the user H on the basis of the moving body coordinate system which are stored in the user position memory 13b and the user orientation memory 13d, and thus the position Pr of the moving body 1 and the orientation Dr of the moving body 1 in the user coordinate system are calculated and stored in the moving body position memory 13e and the moving body orientation memory 13f respectively (S3).

Subsequent to the processing of S3, the moving target T1 in the user coordinate system is calculated and stored in the target position memory 13g (S4). After the processing of S4, the lateral deviation $\Delta X_t$ in the xu-axis direction between the position Pr of the moving body in the moving body position memory 13e and the moving target T1 in the target position memory 13g is calculated and stored in the lateral deviation memory 13h (S5).

Subsequent to the processing of S5, the control target T2 is calculated based on the moving target T1 stored in the target position memory 13g and the velocity Vu of the user H stored in the user velocity memory 13c (S6). Specifically, first, the shift amount Ys (see Fig. 3) is calculated from the velocity Vu of the user H by Formula 1 mentioned above, and the position obtained by adding the shift amount Ys to the moving target T1 in the yu-axis direction of the moving target T1 is defined as the control target T2.

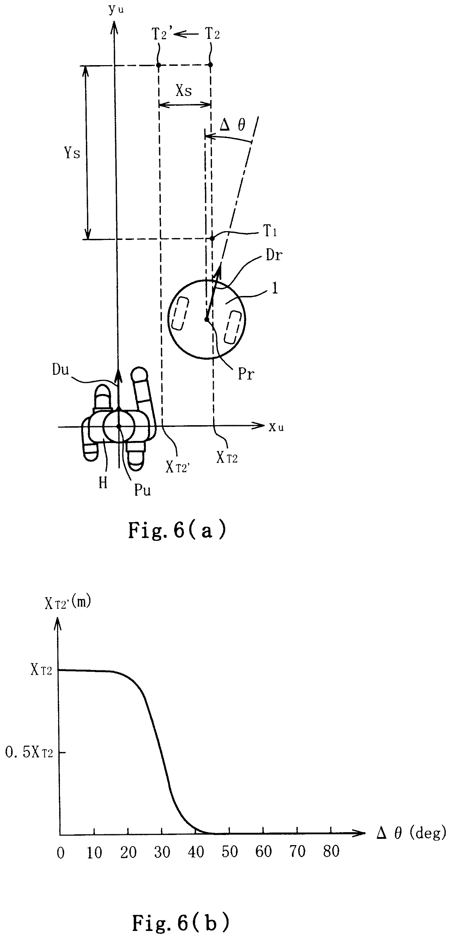

Subsequent to the processing of S6, by shifting the control target T2 based on the orientation Dr of the moving body 1 in the moving body orientation memory 13f, the shift control target T2' is calculated and stored in the control target position memory 13i (S7). The Calculation of the shift control target T2' by the processing of S7 will be described with reference to Figs. 6.

Fig. 6 (a) is a view indicating the control target of the moving body 1 and Fig. 6(b) is a graph indicating a position $X_{T2'}$ of the shift control target T2' in the xu-axis direction corresponding to the angular deviation $\Delta\theta$. As shown in Fig. 6(a), the shift control target T2' is calculated by shifting the control target T2 based on the angular deviation $\Delta\theta$ which is an angle formed by intersecting the orientation Dr of the moving body 1 and the yu-axis. The position $X_{T2}$ of the shift control target T2' in the yu-axis direction is determined by the following Formula 2 based on the position XT2 of the control target T2 in the xu-axis direction and the angular deviation $\Delta\theta$.

$$X_{T2'} = X_{T2}\left(1 - \frac{1}{1 + \exp\left(-\beta_1\left(\frac{2|\Delta\theta|}{\theta_{max}} - \alpha_1\right)\right)}\right) \quad \cdot\cdot\cdot \text{ Formula 2}$$

It should be noted that $\alpha_1$, $\beta_1$ and $\theta_{max}$ are coefficients in Formula 2 and these coefficients are values calculated beforehand by experiments. The position $X_{T2'}$ calculated by Formula 2 is stored in the control target position memory 13i.

With reference to Fig. 6(c), a relation between the angular deviation $\Delta\theta$ and the position $X_{T2'}$ will be described. As shown in Fig. 6(c), the position $X_{T2'}$ of the shift control target T2' in the xu-axis direction gradually decreases corresponding to increase in the angular deviation $\Delta\theta$ according to Sigmoid curve. The deviation of the position $X_{T2'}$ and the position XT2 of the control target T2 in the xu-axis direction corresponds to the shift amount Xs in Fig. 6(a). As a result, since the shift control target T2' is at the more user H side than the control target T2, even when the user H turns left or rotates left on the spot, the moving body 1 can be prevented from moving in a large turn.

Also, since the shift amount Xs changes gradually corresponding to the increase in the angular deviation $\Delta\theta$ according to the Sigmoid curve, when the angular deviation $\Delta\theta$ is small, that is, when the orientation Du of the user H changes slightly, the shift amount Xs does not increase sensitively. As a result, since the moving body 1 does not change direction rapidly due to a slight change of the orientation Du of the user H, behavior of the moving body 1 can be stabilized and further movement operation of the moving body 1 can be realized more naturally.

Referring back to Fig. 5, since the control target T2 is shifted by the processing of S7 toward the shift control target T2' which is at the user H side, when the user H turns left or rotates left, the moving body 1 can be prevented from moving in a large turn. In the present embodiment, in order to further prevent the moving body 1 from moving in a large turn, in addition to the shift to the shift control target T2', the steering command value ω for steering the moving body 1 is corrected corresponding to the lateral deviation ΔXt between the position Pr of the moving body 1 and the moving target T1. With reference to Fig. 5 and Figs. 7, this correction of the steering command value ω will be described

First, in Fig. 5, after the processing of S7, the target path R from the position Pr to the shift control target T2' is calculated from the position Pr of the moving body 1 in the moving body position memory 13e and the shift control target T2' in the control target position memory 13i (S8), and the angle θt formed by the target path R and the orientation Dr of the moving body 1 in the moving body orientation memory 13f is calculated and stored in the midpoint angle memory 13j (S9). After the processing of S9, the steering command value ω is calculated from the angle θt in the midpoint angle memory 13j and the previous value $\Delta\theta_{t0}$ of the angle θt in the midpoint angle previous value memory 13k (S10) . This steering command value ω is corrected based on the lateral deviation ΔXt in the lateral deviation memory 13h and the corrected steering command value ω is stored in the steering command value memory 13m (S11). With reference to Figs. 7, the calculation and correction of the steering command value ω through the processing of S8 to S11 will be described.

In Fig. 7(a), the target path R for the moving body 1 to move from the position Pr of the moving body 1 to the shift control target T2' which is calculated in the process of S7 in Fig. 5 (S8 in Fig. 3) . In the present embodiment, the target path R is defined an S-shaped curve connecting the position Pr and the shift control target T2' and a curved shape of the target path R is defined to an extent that the moving body 1 can move stably from the position Pr to the shift control target T2'. In a calculation of the steering command value, first, the midpoint Tc of the target path R is selected as a target point to which the moving body 1 moves along the target path R, and the steering command value ω1 with which the moving body 1 is moved toward the midpoint Tc is calculated. Specifically, the steering command value $\omega 1$ is calculated in Formula 3 based on the angle $\Delta\theta_1$ formed by the midpoint Tc and the orientation Dr of the moving body 1, the previous value $\Delta\theta_{t0}$ of the $\Delta\theta_t$, and the width d between the left and right wheels 17.

$$\omega 1 = \frac{K_{p1} \cdot \Delta\theta_t + K_{p2} \cdot \Delta\theta_t{}^3 + K_d \cdot (\Delta\theta_t - \Delta\theta_{t0})}{d/2} \quad \cdot \quad \cdot \quad \cdot \text{ Formula 3}$$

It should be noted that $K_{p1}$, $K_{p2}$, $K_d$ are coefficients and are values calculated beforehand by experiments. Although the moving body 1 can move toward the shift control target T2' with the steering command value $\omega 1$, in the present embodiment, the moving body 1 is steered based on the steering command value $\omega$ obtained by further correcting the steering command value $\omega 1$ with a lateral deviation term f (AXt) on the basis of the lateral deviation $\Delta$Xt. Specifically, the lateral deviation term f (AXt) is calculated by Formlua 4 and the steering command value $\omega$ by the lateral deviation term f (AXt) and the steering command value $\omega 1$ is calculated by Formula 5.

$$f(\Delta Xt) = \omega_{max} \left( 1 - \frac{1}{1 + \exp\left(-\beta_2 \left(\frac{2|\Delta Xt|}{\pi} - \alpha_2\right)\right)} \right) \quad \cdot \quad \cdot \quad \cdot \text{ Formula 4}$$

$$\omega = \omega 1 + f(\Delta Xt) \quad \cdot \quad \cdot \quad \cdot \text{ Formula 5}$$

It should be noted that $\alpha_2$, $\beta_2$, $\omega_{max}$ are coefficients and are values calculated beforehand by experiments. In the processing of S11 in Fig. 5, the steering command value $\omega$ by Formula 5 is stored in the steering command value memory 13m.

As shown in Fig. 7(b), the lateral deviation term f (AXt) increases gradually corresponding to the increase in the lateral deviation $\Delta$Xt according to the Sigmoid curve. Specifically, a large value is set as the lateral deviation term f (AXt) corresponding to the lateral deviation $\Delta$Xt. According to an increase in the absolute value of the lateral deviation $\Delta$Xt, the greater the distance of the moving body 1 and the moving target T1 becomes, the larger the lateral deviation term f (AXt) becomes, and the smaller the absolute value of the lateral deviation $\Delta$Xt is, the smaller the lateral deviation term f (AXt) becomes.

The case where the absolute value of the lateral deviation $\Delta$Xt is large corresponds to the case where the deviation of the moving body 1 and the moving target T1 in the xu-axis direction is large, and also corresponds to the case where the moving body 1 is distant from the moving target T1 or the shift control target T2' calculated based on the moving target T1 are separated. In this case, the steering command value $\omega$ becomes large when a large value is set as the lateral deviation term f ($\Delta$Xt). As a result, when the moving body 1 and the shift control target T2' are distant, since the moving body 1 can move to the shift control target T2' side more quickly due to the large steering command value $\omega$, the moving body 1 can moved in a smaller turn.

On the other hand, the case where the absolute value of the lateral deviation $\Delta$Xt is small corresponds to the case where a deviation of the moving body 1 and the shift control target T2' is small, therefore it is not necessary to steer the moving body 1 toward the user H side. In this case, setting a small value as the lateral deviation term f (AXt) does not cause the moving body 1 to be steered toward the user H, therefore unstable action concerning the steering of the moving body 1 can be prevented, thus behavior of the moving body 1 can be stabilized.

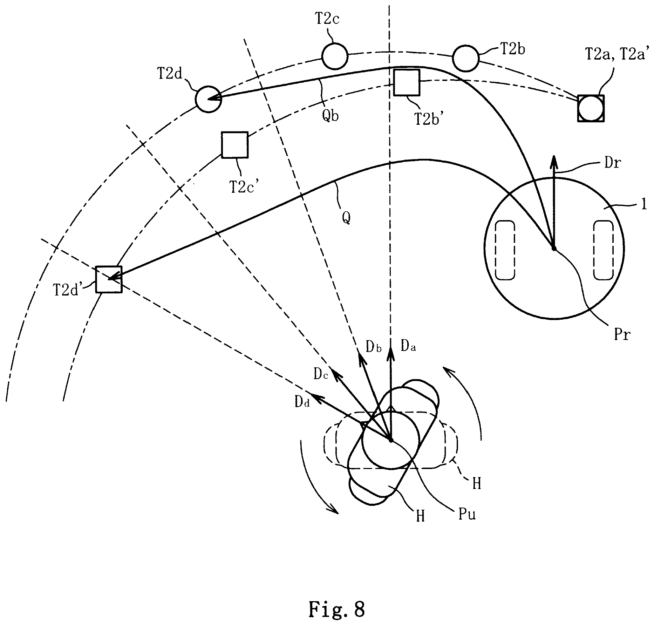

Referring back to Fig. 5, after the processing of S11, the drive unit 18 is driven based on the steering command value $\omega$ in the steering command value memory 13m and the moving body 1 is moved (S13). As a result, with respect to the shift control target T2' the turn of which is smaller than that of the control target T2, the moving body 1 is steered further heavily to the shift control target T2' side, therefore the movement trajectory of the moving body 1 can be in further smaller turn. With reference to Fig. 8, the movement trajectory of the moving body 1 by the shift control target T2' and the steering command value $\omega$ in the case where the user H rotates left on the spot will be descried.

Fig. 8 is a view indicating the movement trajectories of the control target T2 and the shift control target T2' when the user H turns left. In Fig. 8, the case where the shift amount Ys is set to a constant value, not zero, even when the user H turns left on the spot is shown for good explanation. As is the case in Fig. 3(b), in Fig. 8, the user H turns left on the spot from the orientation Da to the orientation Db, Dc, Dd and keeps turning left after turns to the orientation Dd. The control target T2a and the shift control target T2a' are calculated from the orientation Da of the user H, and in the same manner, the control targets T2a to T2d and the shift control targets T2a' to T2d' are calculated from the orientations Db to Dd of the user H.

As shown in Fig. 8, a movement of the moving body 1 by the conventional control targets T2a to T2d is steered along the control targets T2a to T2d which are larger than the case where the user turns clockwise. Therefore, the movement trajectory Qb formed by the movement of the moving body 1 to the control targets T2a to T2d becomes with a large turn.

On the other hand, according to the moving body 1 of the present embodiment, the shift control targets T2a' to T2d' which are with a smaller turn than the control targets T2a to T2d are set, and the moving body 1 is moved based on the steering command value $\omega$ to which the lateral deviation term f ($\Delta$Xt) by the lateral deviation $\Delta$Xt between the position Pr of the moving body 1 and the moving target T1 is added. Thus, since the moving body 1 is moved along the more user H side than the shift control targets T2a' to T2d' having a smaller turn, the movement trajectory Q of this movement can be in a further smaller turn than that of the shift control targets T2a' to T2d'.

Therefore, since the moving body 1 of the present embodiment is moved based on the steering command value $\omega$ by the shift control targets T2a' to T2d' and the lateral deviation term f (AXt) even when the user H turns left or rotates left, the moving body 1 can be prevented from moving in a large turn. As a result, the moving body 1 can move appropriately following the user H without a delay in following even when the user H turns left or rotates left.

Although the present invention has been described based on embodiments, the present invention is not limited to the above-described embodiments in any way, and it can be easily understood that various improvements and modifications are possible within the spirit of the present invention.

In the above embodiments, the case where the steering command value $\omega$1 is calculated based on the midpoint Tc of the target path R has been described. However, the present invention is not necessarily limited thereto. The steering command value $\omega$1 may be calculated based on a middle point on the target path R such as a position near the midpoint Tc on the target path R or a position approximate to the target path R near the midpoint Tc. Also, the steering command value $\omega$1 may be calculated based on a position representing a characteristic of the target path R such as an inflection point, a saddle point, a local maximum point, a local minimum point, and a point near the above mentioned points. Further, the steering command value $\omega$1 may be calculated corresponding to the velocity Vr or angle velocity of the moving body 1 at the moment and the velocity or angle velocity of the moving body 1 targeted at the time that the shift control target T2' is reached.

In the above embodiments, the case where the position Pu, the velocity Vu, and the orientation Du, of the user H are calculated based on the distance measurement data obtained by the distance measurement sensor 16 has been described. However, the present invention is not necessarily limited thereto. The position Pu, the velocity Vu, and the orientation Du, of the user H may be calculated based on images obtained by a camera that is installed instead of the distance measurement sensor 16.

In the above embodiments, the case where, in Fig. 6 (b) and Fig. 7(b), the position $X_{T2}$ and the lateral deviation term f (AXt) are changed according to the Sigmoid curve has been described. However, the present invention is not necessarily limited thereto. The position $X_{T2}$ and the lateral deviation term f (AXt) may be changed based on the other shaped curves such as Gaussian curve.

In the above embodiments, the case where the lateral deviation $\Delta$Xt is defined as a deviation in the xu-axis direction between the position Pr of the moving body and the moving target T1 has been described. However, the present invention is not necessarily limited thereto. The lateral deviation $\Delta$Xt may be defined as a deviation in the xu-axis direction between the position Pr of the moving body and the shift control target T2'.

In the above embodiments, the case where the moving body 1 moves while following the right front of the user H has been described. However, the present invention is not necessarily limited thereto. The moving body 1 may move following the user H in the left front thereof.

The numerical values listed in the above embodiments are merely examples, and matter of course, it is possible to adopt other numerical values.

[Reference Signs List]

1       moving body
16      distance measurement sensor (detection unit)
17      wheel (portion of movement unit and moving part)
18      drive unit (portion of movement unit and moving part)
H       user (target)

R  target path
T1  moving target (moving target, first moving target)
$\Delta\theta$  angular deviation
T2  control target (moving target, second moving target)
T2'  shift control target (moving target)
Tc  midpoint (middle point)
$\Delta Xt$  lateral deviation
S2  position orientation calculation unit, velocity calculation unit
S4  moving target calculation unit
S7  moving target shift unit, first moving target calculation unit
S11  steering angle correction unit
S12  movement control unit

**Claims**

1. A moving body having a movement unit, the moving body moves following a target by the movement unit, the moving body comprising:

  a distance measurement unit for measuring the target;
  a position orientation calculation unit for calculating position and orientation of the target based on a plurality of distance measurement data measured by the distance measurement unit;
  a moving target calculation unit for calculating a moving target of the moving body with respect to the target based on a calculation result obtained by the position orientation calculation unit;
  a moving target shift unit for shifting the moving target to a target side based on an angular deviation formed by an orientation of the moving body and the orientation of the target calculated by the position orientation calculation unit; and
  a movement control unit for controlling the movement unit so that the moving body moves to the moving target shifted by the moving target shift unit.

2. The moving body according to claim 1, further comprising a velocity calculation unit for calculating a velocity of the target based on a plurality of distance measurement data measured by the distance measurement unit, wherein the moving target calculation unit comprises a first target calculation unit for calculating a first moving target for the moving body based on the position and orientation of the target calculated by the position orientation calculation unit and a second target calculation unit for calculating a second moving target for the moving body based on the first moving target calculated by the first target calculation unit and the velocity of the target calculated by the velocity calculation unit, and wherein the moving target shift unit shifts the second moving target to the target side as the moving target.

3. The moving body according to claim 1 or claim 2, wherein the moving target shift unit shifts the moving target to the target side in a direction orthogonal to the orientation of the target calculated by the position orientation calculation unit.

4. The moving body according to any of claims 1 to 3, wherein the moving target shift unit calculates a shift amount of the moving target based on the angular deviation and Sigmoid curve.

5. The moving body according to any of claims 1 to 4, further comprising:

  a target path calculation unit for calculating a target path for the moving body based on the position of the moving body and the moving target shifted by the moving target shift unit;
  a steering angle calculation unit for calculating a steering angle for the moving unit based on a midpoint on the target path calculated by the target path calculation unit; and
  a steering angle correction unit for correcting the steering angle calculated by the steering angle calculation unit based on a lateral deviation of the moving target calculated by the moving target calculation unit or the moving target shifted by the moving target shift unit and the position of the moving body.

6. The moving body according to claim 5,

wherein the steering angle correction unit corrects the steering angle based on the lateral deviation and the Sigmoid curve.

7. The moving body according to any of claims 1 to 6,
   wherein the movement control unit moves the moving body so as to move following the target in the right front or the left front of the target.

8. The moving body according to any of claims 1 to 7,
   wherein the movement unit moves the moving body with a non-holonomic movement unit.

Fig. 1 ( a )

Fig. 1 ( b )

Fig. 2

Fig.3(a)

Fig.3(b)

Fig. 4

## Main processing

Obtain distance measurement data from distance measurement sensor, and store distance measurement data in distance measurement data memory — S1

Calculate position, velocity, and orientation of user based on measurement data memory values, and store in user position memory, user orientation memory, and user velocity memory — S2

Calculate position and orientation of moving body in user coordinate system based on user position memory and user orientation memory values, and store in moving body position memory and user orientation memory — S3

Calculate moving target for moving body in user coordinate system, and store in target position memory — S4

Calculate deviation of values of moving body position memory and target position memory in xu-axis direction, and store in lateral deviation memory — S5

Calculate control target based on values of target position memory and user velocity memory — S6

Shift control target based on moving body orientation memory values, and store in control target position memory — S7

Calculate target path for moving body based on moving body position memory and control target position memory values — S8

Calculate angle formed by midpoint of target path and moving body orientation memory value, and store in midpoint angle memory — S9

Calculate steering command value based on values of midpoint angle memory and midpoint angle previous value memory — S10

Correct steering command value based on lateral deviation memory value, and store in steering command value memory — S11

Operate drive unit based on steering command value memory value — S12

Store midpoint angle memory value in midpoint angle previous value memory — S13

Fig. 5

Fig. 6 ( a )

Fig. 6 ( b )

Fig. 7 ( a )

lateral deviation term f ($\Delta$Xt) (deg)

Fig. 7 ( b )

Fig. 8

## INTERNATIONAL SEARCH REPORT

International application No.

PCT/JP2019/012300

### A. CLASSIFICATION OF SUBJECT MATTER
Int. Cl. G05D1/02(2006.01)i

According to International Patent Classification (IPC) or to both national classification and IPC

### B. FIELDS SEARCHED
Minimum documentation searched (classification system followed by classification symbols)
Int. Cl. G05D1/00-1/12, B25J1/00-21/02

Documentation searched other than minimum documentation to the extent that such documents are included in the fields searched
Published examined utility model applications of Japan     1922-1996
Published unexamined utility model applications of Japan   1971-2019
Registered utility model specifications of Japan           1996-2019
Published registered utility model applications of Japan   1994-2019

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2017-120495 A (EQUOS RESEARCH CO., LTD.) 06 July 2017, entire text, all drawings & US 2019/0064838 A1, entire text, all drawings & WO 2017/115548 A1 & EP 3399378 A1 & CN 108027616 A | 1-8 |
| A | JP 2017-129908 A (EQUOS RESEARCH CO., LTD.) 27 July 2017, entire text, all drawings (Family: none) | 1-8 |
| A | JP 2016-184337 A (EQUOS RESEARCH CO., LTD.) 20 October 2016, entire text, all drawings (Family: none) | 1-8 |
| A | JP 2007-316924 A (TOYOTA MOTOR CORP.) 06 December 2007, entire text, all drawings (Family: none) | 1-8 |

☒ Further documents are listed in the continuation of Box C.      ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| 07.06.2019 | 18.06.2019 |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

| International application No. |
| --- |
| PCT/JP2019/012300 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 2008-234404 A (TOYOTA MOTOR CORP.) 02 October 2008, entire text, all drawings (Family: none) | 1-8 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008234404 A